# EUROPEAN PATENT SPECIFICATION

(11) **EP 2 035 222 B1**
(45) Date of publication and mention of the grant of the patent: **08.08.2012**
(21) Application number: 07748239.6
(22) Date of filing: 13.06.2007
(51) Int. Cl.: B32B 7/02, B32B 3/30, B32B 5/08, B32B 9/02, B32B 27/04, B44C 5/04, E04F 15/02, E04F 13/08, B32B 29/06, B32B 27/42, B32B 27/20, B32B 21/02

(54) **A DECORATIVE, LOW NOISE LAMINATE EQUIPPED WITH A PATTERNED BALANCE LAYER FORMED BY COMPRESSION**
GERÄUSCHDÄMPFENDES DEKORATIVES LAMINAT, DAS MIT EINER DURCH VERDICHTUNG GEBILDETEN GEMUSTERTEN AUSGLEICHSSCHICHT VERSEHEN IST
STRATIFIE DECORATIF A FAIBLE BRUIT QUI PRESENTE UNE COUCHE D'EQUILIBRAGE DOTEE D'UN MOTIF ET FORMEE PAR COMPRESSION

(30) Priority: 16.06.2006 SE 0601329
(43) Date of publication of application: 18.03.2009
(73) Proprietor: Pergo (Europe) AB, 231 25 Trelleborg (SE)
(72) Inventor: ENGSTRÖM, Nils-Erik, 231 53 Trelleborg (SE); EK, Carl-Gustav, 231 31 Trelleborg (SE)
(74) Representative: Müller-Gerbes Wagner Albiger Patentanwälte
(86) International application number: PCT/SE2007/000576
(87) International publication number: WO 2007/145572

(56) References cited:
- WO-A1-02/47906
- WO-A1-2004/050355
- US-A1- 2005 118 398
- DATABASE WPI Week 199227 Thomson Scientific, London, GB; AN 1992-222422 XP002584194 -& JP 04 146368 A (HOKUSHIN KOGYO KK) 20 May 1992 (1992-05-20)
- DATABASE WPI Week 199303 Thomson Scientific, London, GB; AN 1993-023434 XP002584195 -& JP 04 351538 A (NODA KK) 7 December 1992 (1992-12-07)
- PATENT ABSTRACTS OF JAPAN & JP 04 351538 A (NODA CORP) 07 December 1992
- PATENT ABSTRACTS OF JAPAN & JP 04 146368 A (HOKUSHIN IND INC) 20 May 1992
- PATENT ABSTRACTS OF JAPAN & JP 07 054475 A (SANSHIN KORUKU KK) 28 February 1995

## Description

### BACKGROUND OF THE INVENTION

### 1. Field of the invention

The present invention relates to a decorative thermosetting laminate with a damping layer intended to decrease the sound-level.

### 2. Description of related prior art

Products coated with thermosetting laminate are common nowadays. They are foremost used where the demands on abrasion resistance are great, but also where resistance towards different chemicals and moisture are demanded. As example of such products can be mentioned floors, floor beadings, work tops, desk tops and wall panels.

The thermosetting laminate most often consists of a number of base sheets with decor sheet arranged closest to the surface. The decor sheet can be provided with a desired decor or pattern. Such laminates are very hard in order to withstand the wear they are exposed to. This will unfortunately lead to a high noise level when hard objects are retarded suddenly by the laminate surface, such as hard heels towards a laminate surface.

It is known from prior art to arrange a soft layer below laminate panels. The earliest known art comprised expanded thermoplastic materials which where delivered in rolls and was to be arranged on top of the subfloor before the panels where installed. Also non-woven thermoplastic fabric was used in the same way. It is also known to use these or similar materials glued to the base of the panels. WO 2004/050355 shows an example of such a panel.

It is desirable to be able to muffle the sound level in areas with a floor surface of laminate, specially where shoes normally are used.

### SUMMARY OF THE INVENTION

It has, through the present invention, been made possible to meet the above mentioned desires and a decorative laminate with a lower noise level has been achieved. Accordingly, the invention relates to a decorative laminate comprising an upper decorative layer and a carrying core. The upper side of the core is provided with the decorative layer and that the lower side of the core is provided with a balance layer. The balance layer have the purpose of preventing warping of said decorative laminate and at the same time having the purpose of acoustic dampening. The invention is characterised in that the balance layer comprises a polymer and cellulose and that the balance layer have a density in the range 30 - 300 kg/m³. A predetermined area portion of the balance layer is compressed so that the density is increased by a factor 1.3 or more. Said increased density does not exceed the density 1100 kg/m³. The balance layer hereby forms at least one low density area and at least one high density area.

According to the invention the decorative laminate is a floor panel. The balance layer have a plurality of areas selected from the group consisting of; low density area in the range 30 - 300 kg/m3 and high density area in the range, selected low density times 1.3 or more, but no more than 1100 kg/m³.

The plurality of low density area and high density area suitably forms pattern on the balance layer. The low density areas represents at least 50% of the area of the balance layer. The pattern is selected from the group consisting of; parallel lines, triangles, squares, rectangles, hexagons, octagons, circles, random lines or a combination thereof.

According to one embodiment of the invention the balance layer have a thickness of 1.25 mm and density of around 35 kg/m³ in the low density area while the thickness in the high density area is 0.9 mm, while the density is around 45 kg/m³. The high density areas are 1 mm wide, arranged at 5 mm interval so that a square pattern is formed.

The balance layer and the carrying core is preferably joined with each other by means of pressing, whereupon the achieved laminate is cut into panels and provided with edges intended for joining.

According to one embodiment of the invention the decorative layer is constituted by one or more decor papers impregnated with thermosetting resin and one or more overlay sheets impregnated with thermosetting resin arranged on top of the decor papers and possibly one or more thermosetting resin impregnated underlay papers, arranged under the decor paper or decor papers. The papers and sheets are laminated together under increased pressure and increased temperature.

The overlay sheet and the decor paper is suitably impregnated with melamine-formaldehyde resin while the underlay paper is impregnated with phenol-formaldehyde resin.

In order to increase the abrasion resistance at least one of the sheets impregnated with thermosetting resin, preferably the outermost, is suitably provided with hard particles of for example silicon oxide, aluminium oxide and/or silicon carbide with an average size of 1 -100 µm, preferably around 5-60 µm.

The thermosetting laminate suitably have a thickness in the range 0.15 mm - 1.2 mm, preferably 0.3 mm - 0.9 mm and a density in the range 1250 - 1500 kg / m³.

The carrying core may suitably be constituted by a wood based material like a particle board, a fibre board or an oriented strand board.

According to an alternative embodiment of the invention the carrying core is constituted by a board based on polymers such as polyurethane. Such a carrying core may further comprise fibre or particles.

According to yet another alternative embodiment of the invention the carrying core is constituted by a fibre cement board.

The balance layer preferably have a thickness in the range 0.1-5 mm, most preferably in the range 0.5 - 3 mm. The balance layer is suitably joined with the carrying core by means of glue and pressure. This glue may be a melt-glue wherein the balance layer is joined with the core by means of heat and pressure.

It is known that polymeric materials, especially under dry conditions, help generate undesired static charges which may cause unpleasant discharges when one touch a metal object like a door handle. This charging may, according to a special embodiment of the invention, be counteracted by having the glue comprising a conductive material. Accordingly, the glue may comprise a conductive material such as carbon black or carbon fibre. This additive is used to an amount so that a conductivity better than 500kΩcm is achieved.

### DETAILED DESCRIPTION OF AN EMBODIMENT OF THE INVENTION.

The invention is further described in connection to enclosed figures showing an embodiment of the invention. The figures does not represent scale drawings and are in someway simplified in order to facilitate understanding of the invention. Accordingly,
- figure 1 shows a decorative laminate according to the invention.
- figure 2 shows a portion of a lower side of a laminate according to the invention.
- figure 3 shows a cross section of a laminate according to the invention.

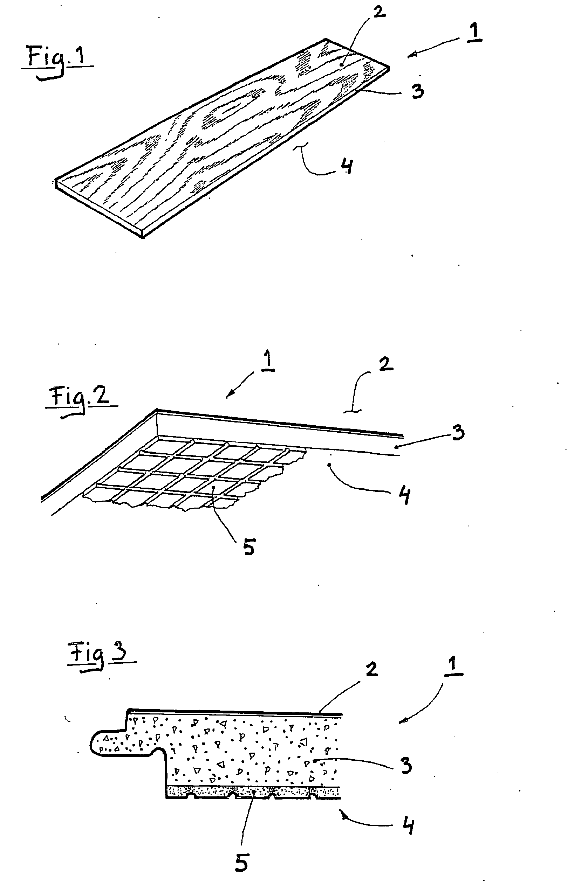

Figure 1 - 3 shows decorative laminate 1, comprising an upper decorative layer 2 and a carrying core 3. The upper side of the core 3 is provided with the decorative layer 2 and a lower side 4 (see figure 2 and 3) of the core is provided with a balance layer 5 (see figure 2 and 3) having the purpose of preventing warping of said decorative laminate 1 and at the same time having the purpose of acoustic dampening. The balance layer 5 comprises a polymer and cellulose and have a density in the range 30 - 80 kg/m³. A predetermined area portion of the balance layer 5 is compressed so that the density is increased by a factor around 1.5. The balance layer 5 hereby forms low density areas and high density areas. A plurality of low density areas and high density area grid forms a pattern in the form of squares of low density areas surrounded by narrow high density lines on the balance layer 5.

The configuration with high density areas and low density areas made from the same material will create a thermocline-like effect where standing waves are dampened as well as hindered from propagating through the material. The term thermocline is best known from oceanographic research where it is known that sonar sometimes is hampered by the fact that seawater can be arranged in layers having different temperatures or salinity. These differences will cause a difference in density and this is what is causing the dampening, reflection and deflection of the sonar waves.

The make up with different density areas will also make the dampening more effective over a larger frequency band.

The balance layer 5 and the carrying core 3 is joined with each other by means of pressing.

The decorative laminate 1 is suitably present in the form of panels provided with edges. These edges are suitably provided with a joint geometry which allows them to be joined, one to the other.

The decorative layer 2 is constituted by one decor paper impregnated with thermosetting resin and one overlay sheet also impregnated with thermosetting resin arranged on top of the decor paper. The papers are laminated together under increased pressure and increased temperature. The overlay sheet and the decor paper are impregnated with melamine-formaldehyde resin. In order to achieve improved abrasion resistance the overlay sheet is provided with small hard particles in the µm range. The thermosetting laminate 1 has a thickness of around 0.15 mm.

The carrying core 3 is constituted by a fibre board having a thickness of around 8 mm while the balance layer has a thickness of around 1 mm.

The invention is not limited by the disclosed embodiments since these can be varied in several ways within the scope of the invention.

## Claims

1. Floor panel, comprising an upper decorative layer and a carrying core, wherein the upper side of the core is provided with the decorative layer and the lower side of the core is provided with a balance layer, said balance layer having the purpose of presenting warping of said decorative laminate and at the same time having the purpose of acoustic dampening, **characterised in that** said balance layer comprises a polymer and cellulose, said balance layer having a density in the range of 30 - 300 kg/m³, a predetermined area portion of the balance layer being compressed so that the density is increased by a factor 1.3 or more, said increased density not exceeding a density of 17.00 kg/m³, wherein the balance layer has a plurality of areas selected from the group consisting of: low density area in the range of 30 - 300 kg/m³ and high density area in the range of the selected low density times 1.3 or more, but not more than 1100 kg/m³, the low density areas representing at least 50% of the area of the balance layer.

2. Floor panel according to claim 1 wherein the balance layer and the carrying core are a laminate joined with each other by means of pressing, the laminate being cut into panels and provided with edges intended for joining.

3. Floor panel according to claim 1 wherein the decorative layer is constituted by one or more decor papers impregnated with thermosetting resin and one or more overlay sheets impregnated with thermosetting resin, preferably melamine-formaldehyde resin, arranged on top of the decor papers, and preferably one or more thermosetting resin, preferably phenol-formaldehyde resin, impregnated underlay papers, arranged under the decor paper or decor papers, which papers are laminated together under increased pressure and increased temperature.

4. Floor panel according to claim 1 wherein the carrying core is constituted by a board selected from the group consisting of a particle board, a fibre board, an oriented strand board, a board based on polymers such as polyurethane, and a fibre cement board.

5. Floor panel according to claim 4 wherein the carrying core is constituted by a board based on polymers such as polyurethane, the board further comprising fibres or particles.

6. Floor panel according to claim 3 wherein at least one of the sheets impregnated with thermosetting resin, preferably the outermost, is provided with hard particles of for example silicon oxide, aluminium oxide and/or silicon carbide with an average size of 1 - 100 µm, preferably around 5 - 60 µm.

7. Floor panel according to claim 3 or 6 wherein the thermosetting laminate has a thickness in the range 0.15 mm - 1.2 mm.

8. Floor panel according to claim 3 or 6 wherein the thermosetting laminate has a density in the range 1250 - 1500 kg/m³.

9. Floor panel according to claim 1 wherein the balance layer has a thickness in the range 0.1 - 5 mm, preferably 0.5 - 3 mm.

10. Floor panel according to claim 1 wherein the balance layer is joined with the carrying core by means of glue and pressure.

11. Floor panel according to claim 10 wherein the balance layer and/or the decorative laminate is joined with the carrying core by means of melt-glue, heat and pressure.

12. Floor panel according to claim 11 wherein the glue comprises a conductive material, the conductivity being preferably better than 500 kΩcm.

13. Floor panel to claim 12 wherein the conductive material is constituted of carbon black or carbon fibre.

14. Floor panel according to claim 1 wherein the plurality of low density area and high density area form a pattern on the balance layer, wherein the pattern is selected from the group consisting of: parallel lines, triangles, squares, rectangles, hexagons, octagons, circles, random lines or a combination thereof.

## Patentansprüche

1. Fußbodenpaneel, umfassend eine obere dekorative Schicht und einen Tragekern, wobei die Oberseite des Kerns mit der dekorativen Schicht versehen und die Unterseite des Kerns mit einer Ausgleichsschicht versehen ist, wobei die Ausgleichsschicht den Zweck hat, das Verziehen des dekorativen Laminats zu verhindern, und gleichzeitig den Zweck der akustischen Dämpfung hat, **dadurch gekennzeichnet, dass** die Ausgleichsschicht ein Polymer und Cellulose umfasst, wobei die Ausgleichsschicht eine Dichte in der Bereichsspanne von 30 - 300 kg/m³ aufweist, wobei ein vorbestimmter Bereichsanteil der Ausgleichsschicht so komprimiert ist, dass die Dichte um einen Faktor 1,3 oder mehr erhöht ist, wobei die erhöhte Dichte eine Dichte von 1100 kg/m³ nicht überschreitet, wobei die Ausgleichsschicht eine Mehrzahl von Bereichen aufweist, die aus der Gruppe ausgewählt sind, die besteht aus: Bereich niedriger Dichte in der Bereichsspanne von 30 - 300 kg/m³ und Bereich hoher Dichte in der Bereichsspanne der ausgewählten niedrigen Dichte multipliziert mit 1,3 oder mehr, jedoch nicht mehr als 1100 kg/m³, wobei die Bereiche niedriger Dichte zumindest 50% des Bereichs der Ausgleichsschicht darstellen.

2. Fußbodenpaneel nach Anspruch 1, wobei die Ausgleichsschicht und der Tragekern ein durch Verpressen aneinander gefügtes Laminat sind, das Laminat in Paneele geschnitten wird und mit Kanten versehen wird, die zum Aneinanderfügen bestimmt sind.

3. Fußbodenpaneel nach Anspruch 1, wobei die dekorative Schicht aus einem oder mehr mit wärmehärtbarem Harz getränkten Dekorpapieren und einer oder mehr mit wärmehärtbarem Harz, bevorzugt Melamin-Formaldehyd-Harz, getränkten Overlaybahnen, die auf den Dekorpapieren angeordnet sind, und bevorzugt einem oder mehr mit wärmehärtbarem Harz, bevorzugt Phenol-Formaldehyd-Harz, getränkten Unterlagepapieren besteht, die unter dem Dekorpapier oder den Dekorpapieren angeordnet sind, wobei die Papiere unter erhöhtem Druck und erhöhter Temperatur miteinander laminiert werden.

4. Fußbodenpaneel nach Anspruch 1, wobei der Tragekern aus einer Platte besteht, die aus der Gruppe ausgewählt ist, die aus einer Spanplatte, einer Faserplatte, einer OSB-Platte, einer auf Polymeren, wie etwa Polyurethan, basierenden Platte, und einer Faserzementplatte besteht.

5. Fußbodenpaneel nach Anspruch 4, wobei der Tragekern aus einer Platte besteht, die auf Polymeren, wie etwa Polyurethan, basiert, wobei die Platte des Weiteren Fasern oder Partikel umfasst.

6. Fußbodenpaneel nach Anspruch 3, wobei zumindest eine der mit wärmehärtbarem Harz getränkten Bahnen, bevorzugt die äußerste, mit harten Partikeln aus zum Beispiel Siliziumoxid, Aluminiumoxid und/oder Siliziumcarbid mit einer durchschnittlichen Größe von 1 - 100 µm, bevorzugt ungefähr 5 - 60 µm, versehen ist.

7. Fußbodenpaneel nach Anspruch 3 oder 6, wobei das wärmehärtbare Laminat eine Dicke in der Bereichsspanne von 0,15 mm - 1,2 mm aufweist.

8. Fußbodenpaneel nach Anspruch 3 oder 6, wobei das wärmehärtbare Laminat eine Dichte in der Bereichsspanne von 1250 - 1500 kg/m³ aufweist.

9. Fußbodenpaneel nach Anspruch 1, wobei die Ausgleichsschicht eine Dicke in der Bereichsspanne von 0,1 - 5 mm, bevorzugt 0,5 - 3 mm aufweist.

10. Fußbodenpaneel nach Anspruch 1, wobei die Ausgleichsschicht mittels Klebstoff und Druck mit dem Tragekern verbunden wird.

11. Fußbodenpaneel nach Anspruch 10, wobei die Ausgleichsschicht und/oder das dekorative Laminat mittels Schmelzklebstoff, Wärme und Druck mit dem Tragekern verbunden wird.

12. Fußbodenpaneel nach Anspruch 11, wobei der Klebstoff ein leitfähiges Material umfasst, wobei die Leitfähigkeit bevorzugt besser als 500 kΩcm ist.

13. Fußbodenpaneel nach Anspruch 12, wobei das leitfähige Material aus Ruß oder Kohlefaser besteht.

14. Fußbodenpaneel nach Anspruch 1, wobei die Mehrzahl der Bereiche niedriger Dichte und Bereiche hoher Dichte ein Muster auf der Ausgleichsschicht bilden, wobei das Muster aus der Gruppe ausgewählt wird, die besteht aus: parallelen Linien, Dreiecken, Quadraten, Rechtecken, Sechsecken, Achtecken, Kreisen, zufälligen Linien oder einer Kombination daraus.

## Revendications

1. Lame de plancher, comprenant une couche décorative supérieure et une âme de support, dans laquelle la face supérieure de l'âme est pourvue de la couche décorative et la face inférieure de l'âme est pourvue d'une couche d'équilibrage, ladite couche d'équilibrage ayant pour rôle d'empêcher un gauchissement dudit stratifié décoratif tout en servant en même temps d'amortissement acoustique, **caractérisé en ce que** ladite couche d'équilibrage comprend un polymère et de la cellulose, ladite couche d'équilibrage ayant une masse volumique dans la plage de 30 à 300 kg/m³, une portion de surface prédéterminée de la couche d'équilibrage étant comprimée de sorte que la masse volumique soit accrue d'un facteur de 1,3- ou plus, ladite masse volumique accrue ne dépassant 1100 kg/m³, la couche d'équilibrage présente une pluralité de surfaces sélectionnées dans le groupe constitué des suivantes : une surface de faible masse volumique dans la plage de 30 à 300 kg/m³ et une surface de masse volumique élevée qui se situe dans la plage de la faible masse volumique fois 1,3 ou plus, mais sans dépasser 1100 kg/m³, les surfaces de faible masse volumique représentant au moins 50 % de la surface de la couche d'équilibrage.

2. Lame de plancher selon la revendication 1, dans laquelle la couche d'équilibrage et l'âme de support forment un stratifié dont les parties sont assemblées l'une avec l'autre par compression, le stratifié étant découpé en lames et pourvu de bords destinés à l'assemblage.

3. Lame de plancher selon la revendication 1, dans laquelle la couche décorative est constituée d'un ou plusieurs papiers de décoration imprégnés d'une résine thermodurcissable et d'une ou plusieurs feuilles de recouvrement imprégnées d'une résine thermodurcissable, de préférence une résine de mélamine-formaldéhyde, disposées par-dessus les papiers de décoration et, de préférence, d'un ou plusieurs papiers de sous-couche imprégnés d'une résine thermodurcissable, de préférence une résine de phénol-formaldéhyde, disposés sous le ou les papiers de décoration, lesquels papiers sont contrecollés l'un à l'autre sous pression accrue et température accrue.

4. Lame de plancher selon la revendication 1, dans laquelle l'âme de support est constituée d'un panneau sélectionné dans le groupe constitué d'un panneau de particules, d'un panneau de fibres, d'un panneau de brins orientés, d'un panneau à base de polymères, tels que le polyuréthanne, et d'un panneau de fibrociment.

5. Lame de plancher selon la revendication 4, dans laquelle l'âme de support est constituée d'un panneau à base de polymères, tels que le polyuréthanne, le panneau comprenant en outre des fibres ou des particules.

6. Lame de plancher selon la revendication 3, dans laquelle au moins l'une des feuilles imprégnées de résine thermodurcissable, de préférence, celle située le plus à l'extérieur, est dotée de particules dures, par exemple, d'oxyde de silicium, d'oxyde d'aluminium et/ou de carbure de silicium, avec une taille moyenne de 1 à 100 µm, de préférence d'environ 5 à 60 µm.

7. Lame de plancher selon la revendication 3 ou 6, dans laquelle le stratifié thermodurcissable a une épaisseur dans la plage de 0,15 mm à 1,2 mm.

8. Lame de plancher selon la revendication 3 ou 6, dans laquelle le stratifié thermodurcissable présente une masse volumique dans la plage de 1250 à 1500 kg/m³.

9. Lame de plancher selon la revendication 1, dans laquelle la couche d'équilibrage a une épaisseur dans la plage de 0,1 à 5 mm, de préférence de 0,5 à 3 mm.

10. Lame de plancher selon la revendication 1, dans laquelle la couche d'équilibrage est assemblée à l'âme de support par usage de colle et de pression.

11. Lame de plancher selon la revendication 10, dans laquelle la couche d'équilibrage et/ou le stratifié décoratif est ou sont assemblés à l'âme de support par usage de colle thermofusible, de chaleur et de pression.

12. Lame de plancher selon la revendication 11, dans laquelle la colle comprend un matériau conducteur, la conductivité étant de préférence meilleure que 500 kΩcm.

13. Lame de plancher selon la revendication 12, dans laquelle le matériau conducteur est constitué de noir de carbone ou de fibre de carbone.

14. Lame de plancher selon la revendication 1, dans laquelle la pluralité de surfaces de faible masse volumique et de surfaces de masse volumique élevée forme un motif sur la couche d'équilibrage, le motif étant sélectionné dans le groupe constitué de lignes parallèles, de triangles, de carrés, de rectangles, d'hexagones, d'octogones, de cercles, de lignes aléatoires ou d'une combinaison de ceux-ci.
